# EUROPEAN PATENT APPLICATION

(11) **EP 4 807 600 A1**
(43) Date of publication of application: **16.09.2026**
(21) Application number: 25163038.0
(22) Date of filing: 11.03.2025
(51) Int. Cl.: G06F 21/57, H04W 12/30, H04W 12/42

(54) **SYSTEM COMPRISING AN ACCESSED DEVICE AND A KEY DEVICE AND METHOD**

(71) Applicant: Giesecke+Devrient Mobile Security Germany GmbH, 81677 München (DE)
(72) Inventor: Perarnau, Xavier, E-08820 El Prat de Llobregat (Barcelona) (ES)
(74) Representative: Giesecke+Devrient IP

(57) **Abstract**

System comprising an accessed device and a key device, wherein said accessed device is a computer device comprising a Trusted Platform Module (TPM) and said key device is an em-bedded universal integrated circuit card (eUICC) device comprising a secure element (SE), wherein said system further comprises a communication means for enabling said accessed device to communicate with said key device by exchanging an encrypted code in response to an access request during a power-up sequence, wherein said encrypted code is generated by encrypting executable code on the basis of a secret key.

## Description

The invention pertains to a system comprising an accessed device and a key device, wherein said accessed device is a computer device comprising a Trusted Platform Module (TPM) and said key device is an embedded universal integrated circuit card (eUICC) device comprising a secure element (SE), wherein said system further comprises a communication means for enabling said accessed device to communicate with said key device by exchanging an encrypted code in response to an access request during a power-up sequence, wherein said encrypted code is generated by encrypting executable code on the basis of a secret key. The invention further pertains to a method for preventing unauthorized replacement of an executable code contained in the accessed device.

Secure Boot is a security feature found in the UEFI (Unified Extensible Firmware Interface) standard which is designed to add a layer of protection to the pre-boot process, namely by maintaining a cryptographically signed list of binaries authorized or forbidden to run at boot. It helps in improving the confidence that the machine core boot components, in particular boot manager, kernel and initial ram filesystem (initramfs), have not been tampered with.

Secure boot of a computer device usually requires the use of a password or a personal identification number (PIN code) or the use of specialized equipment like a smartcard or a USB drive.

There is a need to provide an improved computer device, in which the boot-up firmware is well protected against intrusive attacks, wherein the computer device is easily accessible for the user.

The present invention addresses the above object by the subject-matter covered by the independent claims. Preferred embodiments of the invention are defined in the dependent claims.

### SUMMARY OF THE INVENTION

1. (First aspect of the invention) System comprising an accessed device and a key device, wherein said accessed device is a computer device comprising a Trusted Platform Module (TPM) and said key device is an embedded universal integrated circuit card (eUICC) device comprising a secure element (SE), wherein said system further comprises a communication means for enabling said accessed device to communicate with said key device by exchanging an encrypted code in response to an access request during a power-up sequence, wherein said encrypted code is generated by encrypting executable code on the basis of a secret key.
2. (Preferred embodiment) System according to clause 1, wherein said communication means is based on wireless networking technology, wireless radio technology or near field communication.
3. (Preferred embodiment) System according to clause 1 or 2, wherein said key device is a mobile communication device.
4. (Second aspect of the invention) Method for preventing unauthorized replacement of an executable code contained in an accessed device, said method comprising
   - providing an accessed device and a key device, wherein said accessed device is a computer device comprising a Trusted Platform Module (TPM) and said key device is an embedded universal integrated circuit card (eUICC) device comprising a secure element (SE);
   - providing a communication means for enabling said accessed device to communicate with said key device;
   - the step of exchanging an encrypted code in response to an access request during a power-up sequence, wherein said encrypted code is generated by encrypting executable code on the basis of a secret key.
5. (Preferred embodiment) Method according to clause 4, wherein said communication means is based on wireless networking technology, wireless radio technology or near field communication.
6. (Preferred embodiment) Method according to clause 4 or 5, wherein said key device is a mobile communication device.
7. (Preferred embodiment) Method according to any of clauses 4 to 6, wherein said method ensures secure boot of the accessed device.

### DESCRIPTION OF THE PREFERRED EMBODIMENTS

The present invention provides a system comprising an accessed device and a key device, wherein said accessed device is a computer device comprising a Trusted Platform Module (TPM) and said key device is an embedded universal integrated circuit card (eUICC) device comprising a secure element (SE), wherein said system further comprises a communication means for enabling said accessed device to communicate with said key device by exchanging an encrypted code in response to an access request during a power-up sequence, wherein said encrypted code is generated by encrypting executable code on the basis of a secret key.

The present invention further provides a method for preventing unauthorized replacement of an executable code contained in an accessed device, said method comprising
- providing an accessed device and a key device, wherein said accessed device is a computer device comprising a Trusted Platform Module (TPM) and said key device is an embedded universal integrated circuit card (eUICC) device comprising a secure element (SE);
- providing a communication means for enabling said accessed device to communicate with said key device;
- the step of exchanging an encrypted code in response to an access request during a power-up sequence, wherein said encrypted code is generated by encrypting executable code on the basis of a secret key.

Several categories of mobile communication devices are known, including consumer mobile communication devices such as smartphones and companion devices (e.g. smartwatches) to smartphones, automotive mobile communication devices that can be hosted in automobiles like cars or trucks, IoT mobile communication devices connecting things in the Internet of Things, IoT.

SGP.22 GSMA RSP Technical Specification Version 3.1 describes procedures for provisioning profiles to eUICCs hosted in consumer mobile communication devices, and for managing profiles in eUICCs, for example by enabling, disabling and deleting profiles.

In particular, the inventive idea comprises two parts, namely a provisioning part and an authentication part.

Preferably, the provisioning part comprises the following steps:
- After regular protocol connection, the flow will start once selected from the device that shall be accessed, wherein the accessed device is a computer device comprising a Trusted Platform Module (TPM).
- The accessed device will retrieve information from the Trusted Platform Module (TPM) and send it to the device to be used as a key, wherein the key device is an embedded universal integrated circuit card (eUICC) device comprising a secure element (SE).
- The key device will check whether there are versions in common. In case there aren't any versions in common, the key device will abort the procedure. In case there are versions in common, the key device will forward its information to the accessed device.
- As a double check, the accessed device will check whether there are matching versions and will abort otherwise.
- The accessed device will generate a challenge, which will be stored within the device's Trusted Platform Module (TPM) temporarily, and sign it with its attestation key (general remark: in computer security, challenge-response authentication is a family of protocols in which one party presents a question ("challenge") and another party must provide a valid answer ("response") to be authenticated).
- The key device will first verify the attestation package, followed by the signature of the challenge. If any of the checks fail, the process will be aborted immediately. Otherwise the challenge is stored temporarily.
- The key device will generate its own challenge and sign the same.
- Then, using both challenges, the key device will derive a binding key and store the same.
- As a final step, the key device will double sign both challenges to provide a proof of tampering.
- Upon reception, the accessed device will verify both signatures. Then, as the key device did, the accessed device will derive a binding key based on both sides challenges.
- Once the binding key is ready, a full end-to-end (E2E) secured connection between the Trusted Platform Module (TPM) and the key device's secure element (SE) is established and the authentication data to be used can be encrypted and sent to the key device's secure element (SE).

Preferably, the authentication part comprises the following steps:
- Once the user selects to use the unlock material from the key device, it will start the discovery information by sending the protocol version and information to the device to be accessed.
- If the accessed device has versions in common it will return its own information.
- On the key device the user confirms that this is the device the user wants to access, and then the key device's secure element (SE) will use the prior established binding key to provide the authentication data to the Trusted Platform Module (TPM).
- The Trusted Platform Module (TPM) shall verify and if valid, it shall decrypt the device and optionally use it as a login, too.

The system and the method according to the present invention are particularly advantageous, since the secure element (SE) of an embedded universal integrated circuit card (eUICC) device is as secure as a standard smartcard and reduces the risk of detection since it does have to be personally inserted and is something the user is carrying with oneself day-to-day.

Further aspects, features and advantages of the present invention will become apparent to those of ordinary skills in the art upon reviewing the following detailed description of preferred embodiments and variants of the present invention in conjunction with the accompanying figures.

Reference will now be made to the accompanying figures, in which:
Figures 1a to 1e show a flow chart of a Trusted Platform Module (TPM) provisioning flow according to an embodiment, wherein the communication means is based, for example, on wireless networking technology, wireless radio technology or near field communication; and
Figures 2a to 2b show a flow chart of a Trusted Platform Module (TPM) authentication flow according to an embodiment, wherein the communication means is based, for example, on wireless networking technology, wireless radio technology or near field communication.

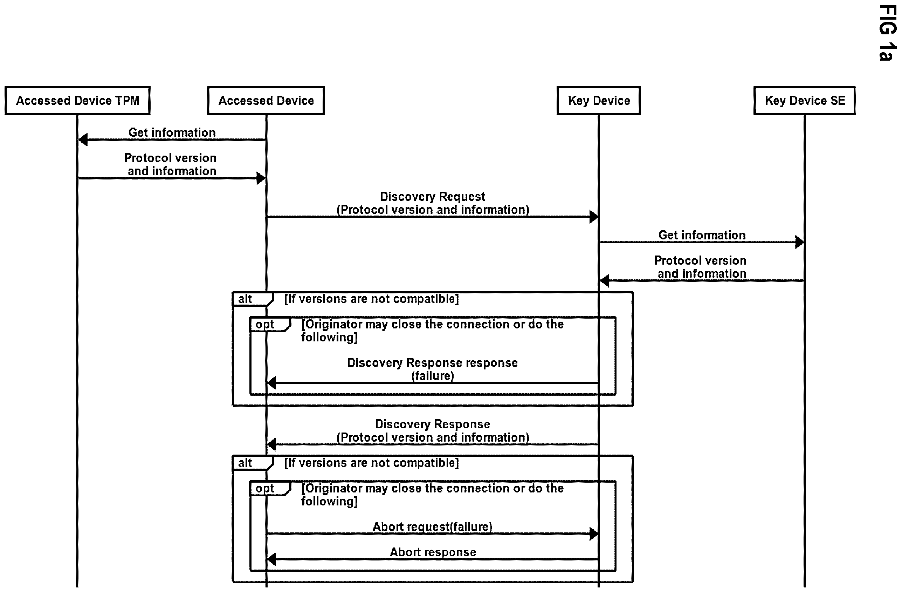

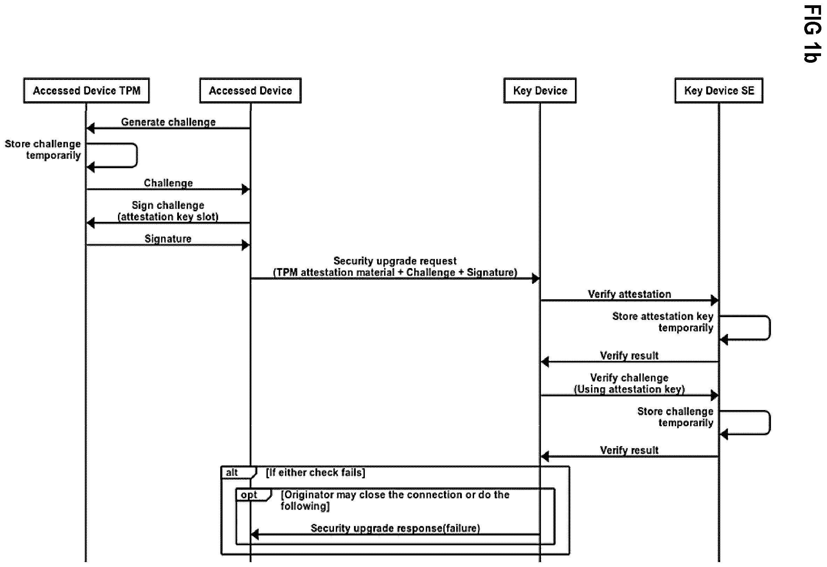

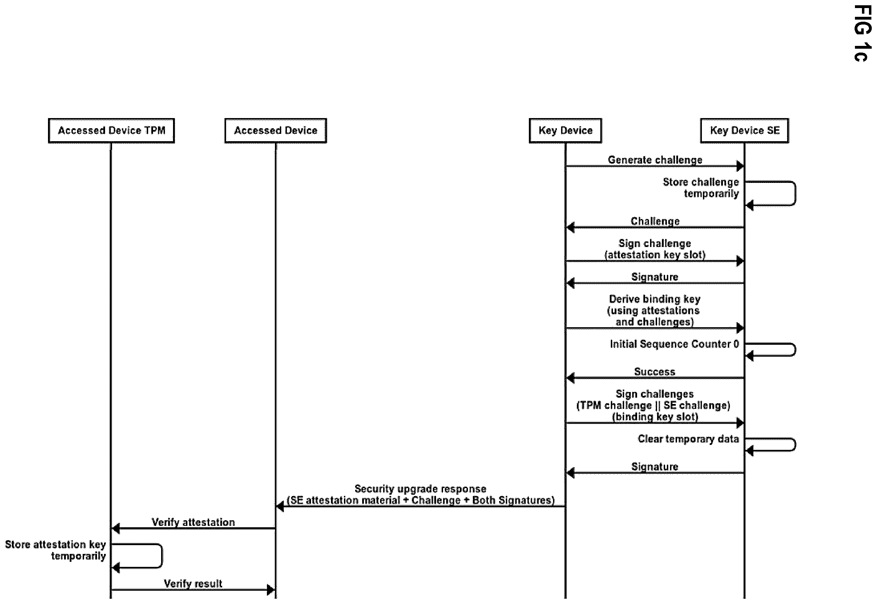

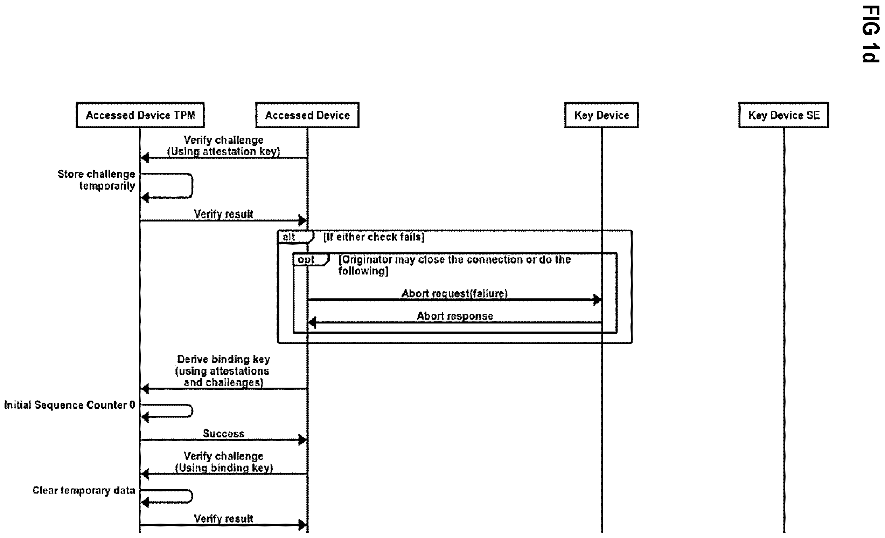

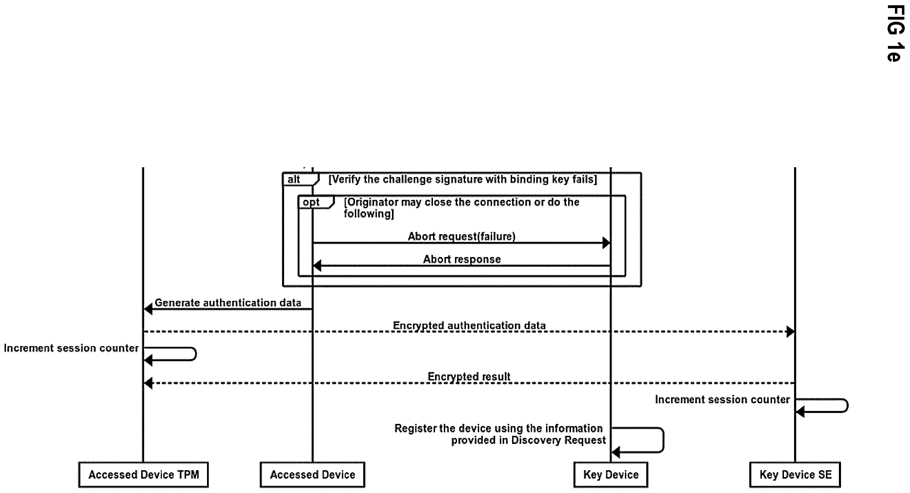

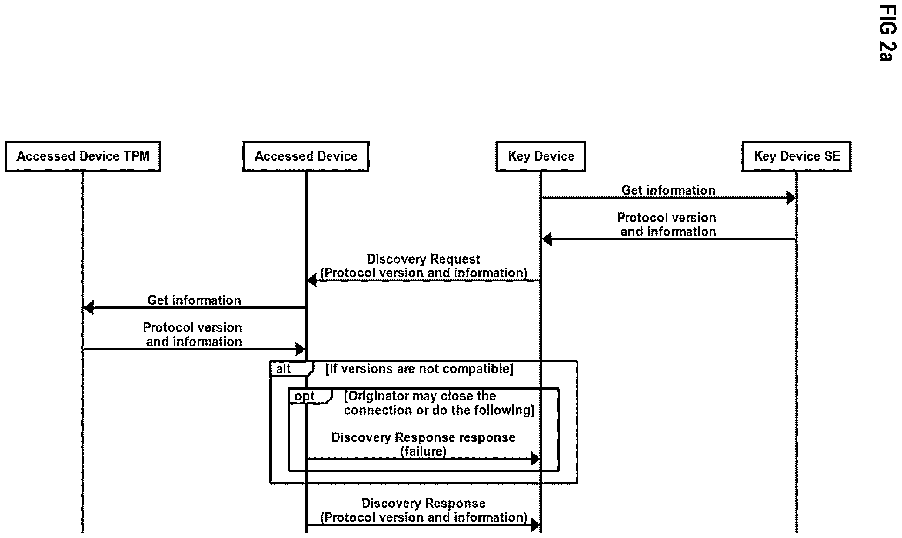

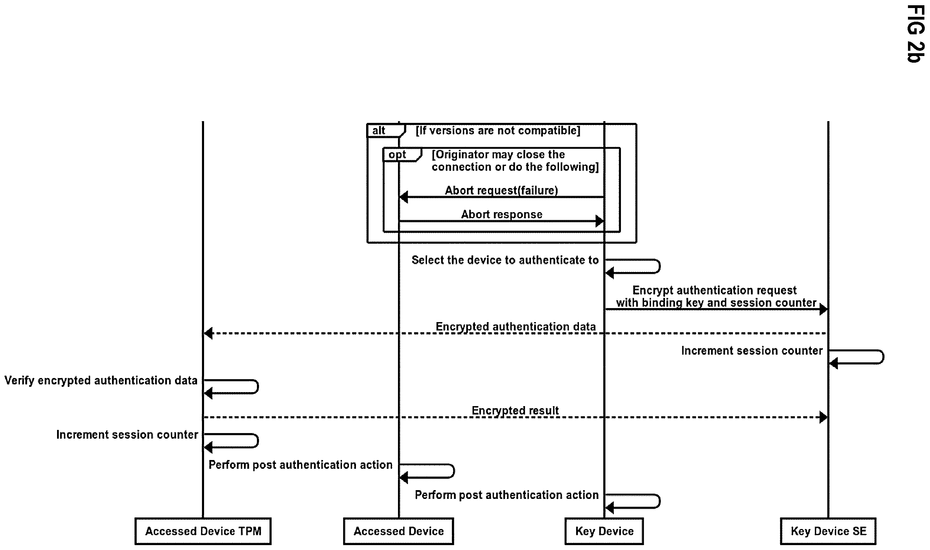

In conjunction with the flow charts shown in Figures 1a to 1e and Figures 2a and 2b an embodiment of the inventive method for preventing unauthorized replacement of an executable code contained in an accessed device is described, wherein the method ensures secure boot of the accessed device, namely a computer device comprising a Trusted Platform Module (TPM). In the embodiment, the key device is an embedded universal integrated circuit card (eUICC) device, namely a mobile communication device comprising a secure element (SE). A communication means for enabling the accessed device to communicate with the key device is based, for example, on wireless networking technology, wireless radio technology or near field communication.

The flow chart of a Trusted Platform Module (TPM) provisioning flow as shown in Figures 1a to 1e comprises the following steps:
- After regular protocol connection, the flow will start once selected from the device that shall be accessed, wherein the accessed device is a computer device comprising a Trusted Platform Module (TPM).
- The accessed device will retrieve information from the Trusted Platform Module (TPM) and send it to the device to be used as a key, wherein the key device is an embedded universal integrated circuit card (eUICC) device comprising a secure element (SE).
- The key device will check whether there are versions in common. In case there aren't any versions in common, the key device will abort the procedure. In case there are versions in common, the key device will forward its information to the accessed device.
- As a double check, the accessed device will check whether there are matching versions and will abort otherwise.
- The accessed device will generate a challenge, which will be stored within the device's Trusted Platform Module (TPM) temporarily, and sign it with its attestation key (general remark: in computer security, challenge-response authentication is a family of protocols in which one party presents a question ("challenge") and another party must provide a valid answer ("response") to be authenticated).
- The key device will first verify the attestation package, followed by the signature of the challenge. If any of the checks fail, the process will be aborted immediately. Otherwise the challenge is stored temporarily.
- The key device will generate its own challenge and sign the same.
- Then, using both challenges, the key device will derive a binding key and store the same.
- As a final step, the key device will double sign both challenges to provide a proof of tampering.
- Upon reception, the accessed device will verify both signatures. Then, as the key device did, the accessed device will derive a binding key based on both sides challenges.
- Once the binding key is ready, a full end-to-end (E2E) secured connection between the Trusted Platform Module (TPM) and the key device's secure element (SE) is established and the authentication data to be used can be encrypted and sent to the key device's secure element (SE).

The flow chart of a Trusted Platform Module (TPM) authentication flow as shown in Figures 2a to 2b comprises the following steps:
- Once the user selects to use the unlock material from the key device, it will start the discovery information by sending the protocol version and information to the device to be accessed.
- If the accessed device has versions in common it will return its own information.
- On the key device the user confirms that this is the device the user wants to access, and then the key device's secure element (SE) will use the prior established binding key to provide the authentication data to the Trusted Platform Module (TPM).
- The Trusted Platform Module (TPM) shall verify and if valid, it shall decrypt the device and optionally use it as a login, too.

## Claims

1. System comprising an accessed device and a key device, wherein said accessed device is a computer device comprising a Trusted Platform Module (TPM) and said key device is an embedded universal integrated circuit card (eUICC) device comprising a secure element (SE), wherein said system further comprises a communication means for enabling said accessed device to communicate with said key device by exchanging an encrypted code in response to an access request during a power-up sequence, wherein said encrypted code is generated by encrypting executable code on the basis of a secret key.

2. System according to claim 1, wherein said communication means is based on wireless networking technology, wireless radio technology or near field communication.

3. System according to claim 1 or 2, wherein said key device is a mobile communication device.

4. Method for preventing unauthorized replacement of an executable code contained in an accessed device, said method comprising
- providing an accessed device and a key device, wherein said accessed device is a computer device comprising a Trusted Platform Module (TPM) and said key device is an embedded universal integrated circuit card (eUICC) device comprising a secure element (SE);
- providing a communication means for enabling said accessed device to communicate with said key device;
- the step of exchanging an encrypted code in response to an access request during a power-up sequence, wherein said encrypted code is generated by encrypting executable code on the basis of a secret key.

5. Method according to claim 4, wherein said communication means is based on wireless networking technology, wireless radio technology or near field communication.

6. Method according to claim 4 or 5, wherein said key device is a mobile communication device.

7. Method according to any of claims 7 to 6, wherein said method ensures secure boot of the accessed device.
